# EUROPEAN PATENT SPECIFICATION

(11) **EP 3 479 609 B1**
(45) Date of publication and mention of the grant of the patent: **04.03.2020**
(21) Application number: 17730394.8
(22) Date of filing: 25.05.2017
(51) Int. Cl.: H04W 8/26, H04W 64/00, H04W 72/04

(54) **PCI SELECTION USING A RADIO ENVIRONMENT MAP**
PCI-AUSWAHL MIT EINER RADIO-UMWELTKARTE
SÉLECTION DE PCI À L'AIDE D'UNE CARTE D'ENVIRONNEMENT RADIO

(30) Priority: 30.06.2016 FR 1670354
(43) Date of publication of application: 08.05.2019
(73) Proprietor: RED TECHNOLOGIES SAS, 75015 Paris (FR)
(72) Inventor: MULLER, Pierre-Jean, 94100 Saint-Maur-Des-Fosses (FR); LE THIERRY D'ENNEQUIN, Christophe, 75005 Paris (FR)
(86) International application number: PCT/EP2017/062704
(87) International publication number: WO 2018/001649

(56) References cited:
- US-A1- 2011 059 744
- TING WU ET AL: "An Automation PCI Allocation Method for eNodeB and Home eNodeB Cell", WIRELESS COMMUNICATIONS NETWORKING AND MOBILE COMPUTING (WICOM), 2010 6TH INTERNATIONAL CONFERENCE ON, IEEE, PISCATAWAY, NJ, USA, 23 September 2010 (2010-09-23), pages 1-4, XP031827840, ISBN: 978-1-4244-3708-5
- MARIEM KRICHEN ET AL: "Performances evaluation of different algorithms for PCIs self configuration in LTE", NETWORKS (ICON), 2012 18TH IEEE INTERNATIONAL CONFERENCE ON, IEEE, 12 December 2012 (2012-12-12), pages 197-203, XP032376781, DOI: 10.1109/ICON.2012.6506558 ISBN: 978-1-4673-4521-7

## Description

### (BRIEF DESCRIPTION OF THE DRAWINGS)

- Figure 1: shows an example of Level 1-Radio Block.
- Figure 2: shows an example of a cell radio propagation.
- Figure 3: shows a high-level view of PCI configuration according to the present invention
- Figure 4: shows the detailed steps to select a PCI according to the present invention.
- Figure 5: shows a first alternative to select a PCI according to the present invention.
- Figure 6: shows a second alternative to select a PCI according to the present invention.
- Figure 7: shows a third alternative to select a PCI according to the present invention.

### (DESCRIPTION OF THE INVENTION)

The present invention assumes that the geographical area over which cells are deployed has been split into a set of Level 1-Radio Blocks, and that a pool of PCIs has been pre-allocated to each Level 1-Radio Block. An example can be found in TING WU ET AL: "An Automation PCI Allocation Method for eNodeB and Home eNodeB Cell",WIRELESS COMMUNICATIONS NETWORKING AND MOBILE COMPUTING (WICOM), 2010 6TH INTERNATIONAL CONFERENCE ON, IEEE, PISCATAWAY, NJ, USA, 23 September 2010 (2010-09-23), pages 1-4, XP031827840,ISBN: 978-1-4244-3708-5

The size of a Level 1-Radio Block is based on the average transmission power of cells deployed. For example, a Level 1-Radio Block can be defined as a square whose sides are twice the distance covered by the typical transmission power of cells that constitute the overlay radio network coverage, e.g. urban macro cells.

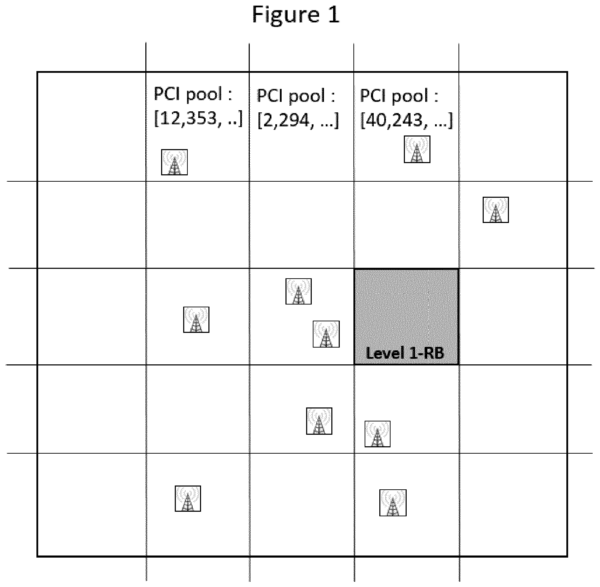

Figure 1 shows a deployment of cells. The grey square labeled "Level 1-RB" is an example of Level 1-Radio Block. Pre-allocated PCI values are shown for illustration at the top of the figure. The method to pre-allocate a set of PCIs to each Level 1-Radio Block is outside the scope of this invention.

Each deployed cell is associated with a Level 1-Radio Block, based on its geographical location and its radio coverage footprint determined using a radio environment map. The method to identify the Level 1-Radio Block associated with a given cell is outside the scope of this invention.

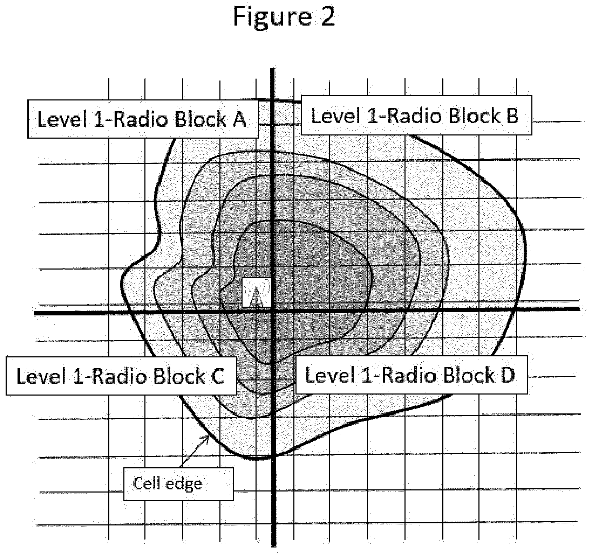

In addition, some of the alternatives described in the present invention assume that the geographic area over which cells are deployed is split into a set of Level 2-Radio Blocks whose size is smaller than Level 1-Radio Blocks. Figure 2 shows an example of Level 2-Radio Blocks. In this figure, each small square is a Level 2-Radio Block. A typical granularity of a Level 2-Radio Block would be 10 x 10 meters.

### PCI constraints

The number of allowed PCI values is limited (e.g., in the case of LTE, the allowed values range from 0 to 503). Therefore, the same PCI value may be configured at multiple cells. In case the radio coverages of cells are overlapping or close to each other, the following PCI constraints should be satisfied, whenever possible, in order to optimize the radio link quality:
- Avoid PCI collisions: a PCI collision occurs when two cells whose radio coverage is overlapping are configured with the same PCI value.
- Avoid PCI confusions: a PCI confusion occurs when the radio coverage of a cell is overlapping with two other cells whose PCI is identical.
- Avoid to assign PCIs with identical secondary synchronization signal (SSS) root indices to cells whose radio coverage is overlapping. For example, if a cell is configured with a PCI value "31", PCI values such as "1", "60", "88" should be not be configured on cells whose radio coverage is overlapping with this cell, because all those PCI values have one of the SSS root indices that is identical (in this example, the first root indice has the value "1" for all those PCI values).
- Avoid to assign PCIs whose modulo 3, modulo 6, or modulo 30 is equal to the PCI configured at cells whose radio coverage is overlapping. This enables to minimize RS ("Reference Signal") interference.

The present invention provides a method to select the PCI value that best satisfies all of the above constraints, among a set of available PCI values.

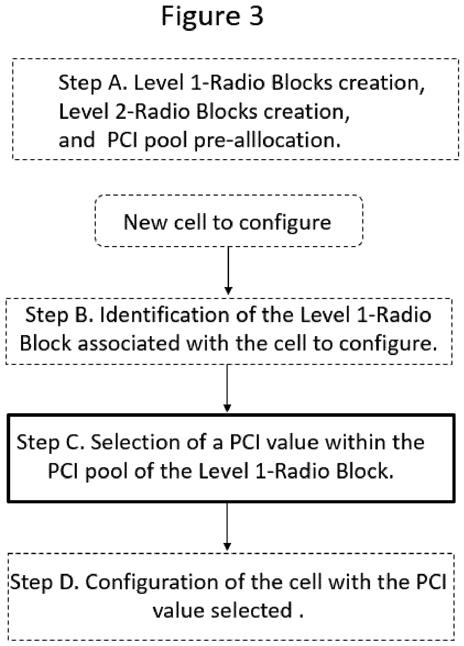

Figure 3 shows a high-level view of PCI configuration. The boxes in dotted lines indicate the steps that are outside of the scope of the present invention.

In step A, the Level 1-Radio Blocks and Level 2-Radio Blocks are created. A set of PCI values is then pre-allocated to each Level 1-Radio Block.

For each new cell to configure, the Level 1-Radio Block associated with this cell is identified in step B.

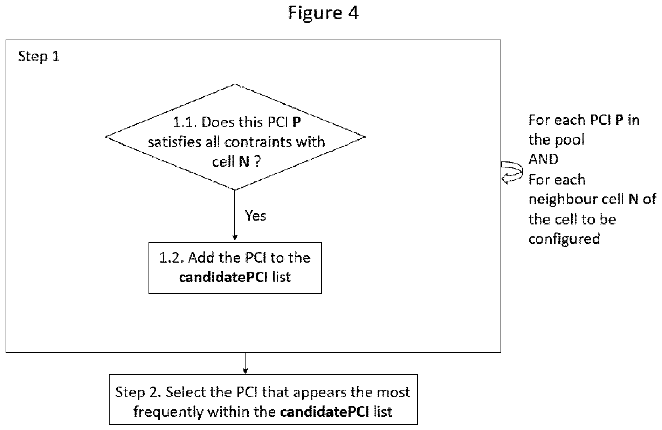

A PCI value is then chosen in step C within the PCI pool of the Level 1-Radio Block identified in step B. This step C is described in more details in Figure 4, Figure 5, Figure 6 and Figure 7.

The PCI value selected in step C is then configured at the cell.

### PCI selection method

Figure 4 shows the detailed steps to select a PCI according to the present invention.

Step 1.1 and step 1.2 shown in Figure 4 are performed for each neighbor cell of the cell being configured and for each PCI in the pool of PCIs. Neighbor cells may be identified using a radio environment map. A cell is considered as a neighbor cell if the radio coverage of this cell is overlapping with the radio coverage of the cell being configured.

In step 1.1, each PCI constraint described earlier in the present invention is checked between the PCI configured at the neighbor cell N and the PCI picked from the pool of PCIs. If all PCI constraints are satisfied, the PCI picked from the pool of PCIs is added to a "candidatePCI" list.

Once steps 1.1 and 1.2 have been applied to all neighbor cells and to all PCIs in the pool, the PCI that appears the most frequently within the "candidatePCI" list is selected in step 2.

Alternatively, as soon as a PCI picked from the pool satisfies all PCI constraints, this PCI is selected as the PCI to configure at the cell.

Although not shown in this Figure 4, a default behavior in case the "candidatePCI" list is empty could be to select the PCI that satisfies a subset of the PCI constraints with the highest number of neighbour cells.

### First alternative PCI selection method

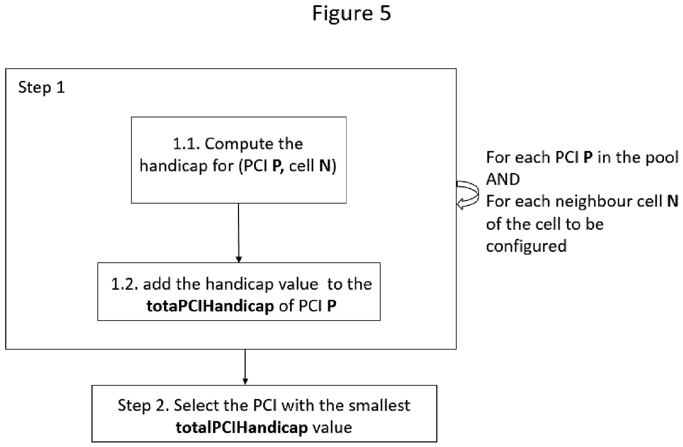

Figure 5 shows alternative steps to select a PCI according to the present invention.

Step 1.1 and step 1.2 shown in Figure 5 are performed for each neighbor cell of the cell being configured and for each PCI in the pool of PCIs.

In step 1.1, a handicap value is computed as follows:
- for each constraint that is not satisfied between the PCI picked from the pool of PCIs and the PCI configured at neighbor cell N, the handicap value is incremented. The incremented value could be, for example, a pre-configured value associated with this constraint. This enables to give a different weight to each PCI constraint.
- the computed handicap value is then added to the "totalPCIHandicap" associated with the PCI picked from the pool of PCIs.

Once the values "totalPCIHandicap" have been computed for each PCI available, the PCI whose "totalPCIHandicap" value is the smallest is selected in step 2.

### Second and third alternatives PCI selection method

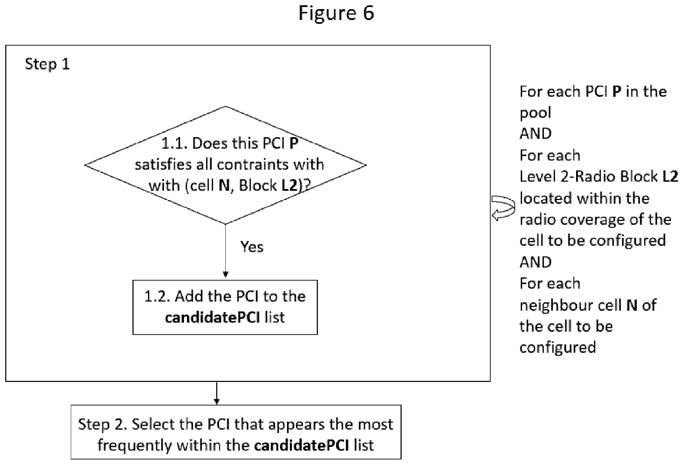

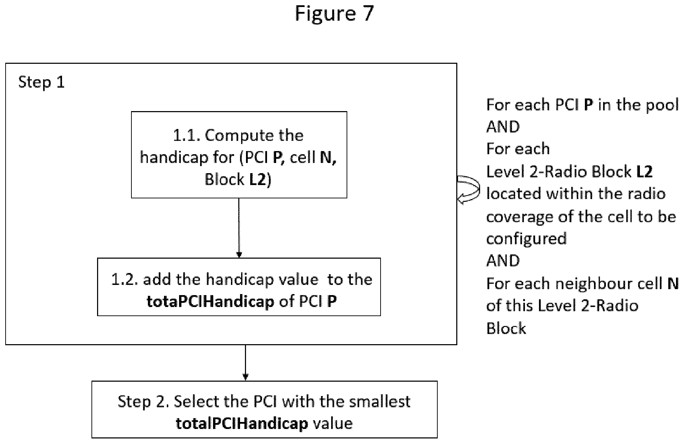

Figure 6 and Figure 7 shows two alternatives to select a PCI according to the present invention.

In those alternatives, step 1.1 to step 1.2 are performed for each PCI in the pool of PCIs, for each Level 2-Radio Block located within the radio coverage of the cell being configured, and for each neighbor cell whose radio coverage is overlapping with this Level 2-Radio Block.

The only difference between the alternatives described in Figure 6 and Figure 7 and the alternatives described respectively in Figure 4 and Figure 5 is that in Figure 6 and Figure 7, the PCI constraints are checked for each Level 2-Radio Block located within the radio coverage of the cell to configure. The alternatives in Figure 6 and Figure 7 therefore enable to select a PCI value in a more optimal manner than in those described in Figure 4 and Figure 5.

The nested iterations described in Figure 4 to Figure 7 (performed for each PCI within the pool of PCIs, for each neighbor cell and, in case of Figure 6 and Figure 7, for each Level 2-Radio Block located within the radio coverage of the cell to be configured) may be performed in any order including but not limited to the exemplary order shown in Figure 4 to Figure 7.

The methods described in Figure 4 to Figure 7 may be applied at network initialization, for example when a new cell is added to the network, or during network operation, for example for self-healing purposes.

In that latter case, when a PCI configured at a cell is identified as non-optimal, for example if it is identified that the quality of the radio link provided by this cell is below a certain level of quality, this PCI may be removed from the pool of PCIs before applying the methods described in Figure 4 to Figure 7 for this particular cell, so as to select a more suitable PCI.

Alternatively, before applying the method described in Figure 5 or the method described in Figure 7 for self-healing purposes for a given cell, the "totalPCIHandicap" associated with the PCI currently configured at this cell may be initialized with a value higher than zero, so that this PCI is less likely to be selected in step 2 of Figure 5 or in step 2 of Figure 7.

## Claims

1. A method to automatically select an optimal PCI value to be configured at a cell belonging to a network of cells, using a radio environment map,
wherein the geographic area over which the cells are deployed is split into a set of Level 1-Radio Blocks,
wherein the size of a Level 1-Radio Block is based on the average transmission power of cells deployed,
wherein a pool of PCIs is pre-allocated for each Level 1-Radio Block,
wherein said cell is associated with a specific Level 1-Radio Block based on its geographical location and its radio coverage footprint,
composed of one the following two operations:
i. for each PCI in the pool of PCIs of the Level 1-Radio Block associated with said cell, computation of a handicap value, incremented for each constraint that is not satisfied between this PCI and the PCI configured at a neighbor cell, and addition of this handicap value to the "totalPCIHandicap" value associated with this PCI, followed by the selection of the PCI whose associated "totalPCIHandicap" value is the smallest, or,
ii. for each PCI in the pool of PCIs of the Level 1-Radio Block associated with said cell, addition of the PCI to a "PCI candidates" list each time all the constraints between this PCI and the PCI configured at a neighbor cell are satisfied, followed by the selection of the PCI that appears the most frequently within this "PCI candidates" list.

2. The method according to claim 1 wherein said value added to the handicap value for a given constraint is a pre-configured value associated with this constraint.

3. The method according to any one of claims 1 to 2 wherein the geographic area over which cells are deployed is split into a set of Level 2-Radio Blocks whose size is smaller than Level 1-Radio Block, and wherein PCI constraints are checked for each Level 2-Radio Block located within the radio coverage of said cell.

4. The method according to any one of claims 1 to 3 wherein said PCI selection method is initiated upon identifying that the PCI configured at a cell is not optimal, and wherein the "totalPCIHandicap" value associated with this PCI is initialized with a value higher than zero, prior to applying said PCI selection method for this cell.

## Patentansprüche

1. Verfahren zum automatischen Auswählen eines optimalen PCI-Werts, der unter Verwendung einer Funkumgebungskarte für eine Zelle zu konfigurieren ist, die zu einem Netzwerk von Zellen gehört,
wobei der geografische Bereich, über den die Zellen eingesetzt werden, in eine Menge von Stufe-1-Funkblocks ("Level 1-Radio Blocks") aufgeteilt ist,
und wobei die Größe eines Stufe-1-Funkblocks auf der mittleren Übertragungsleistung der eingesetzten Zellen basiert,
und wobei jedem Stufe-1-Funkblock vorab eine Gruppe von PCIs zugewiesen wird,
und wobei die Zelle basierend auf ihrem geografischen Ort und ihrer Funkabdeckung einem spezifischen Stufe-1-Funkblock zugeordnet ist,
und das Verfahren aus einem der beiden folgenden Abläufe besteht:
i. für jede PCI der Gruppe von PCIs des der Zelle zugeordneten Stufe-1-Funkblocks Berechnen eines Handicap-Werts, der für jede Zwangsbedingung, die zwischen dieser PCI und der in einer Nachbarzelle konfigurierten PCI nicht erfüllt wird, erhöht wird, und Hinzufügen dieses Handicap-Werts zu dem "totalPCIHandicap"-Wert, der dieser PCI zugeordnet ist, und anschließendes Auswählen der PCI, deren zugeordneter "totalPCIHandicap"-Wert am kleinsten ist, oder,
ii. für jede PCI der Gruppe von PCIs des der Zelle zugeordneten Stufe-1-Funkblocks Hinzufügen der PCI zu einer Liste von "PCI-Kandidaten" jedes Mal, wenn alle Zwangsbedingungen zwischen dieser PCI und der in einer Nachbarzelle konfigurierten PCI erfüllt werden, und anschließendes Auswählen der PCI, die in dieser Liste von "PCI-Kandidaten" am häufigsten enthalten ist.

2. Verfahren nach Anspruch 1, wobei der dem Handicap-Wert für eine gegebene Zwangsbedingung hinzugefügte Wert ein dieser Zwangsbedingung zugeordneter vorkonfigurierter Wert ist.

3. Verfahren nach einem der Ansprüche 1 bis 2, wobei der geografische Bereich, über den die Zellen eingesetzt werden, in eine Menge von Stufe-2-Funkblocks ("Level 2-Radio Blocks") aufgeteilt ist, deren Größe kleiner als die der Stufe-1-Funkblocks ist, und wobei die PCI-Zwangsbedingungen für jeden Stufe-2-Funkblock überprüft werden, der sich innerhalb der Funkabdeckung der Zelle befindet.

4. Verfahren nach einem der Ansprüche 1 bis 3, wobei die PCI-Auswahlmethode initiiert wird, sobald die für eine Zelle konfigurierte PCI als nicht optimal identifiziert wird, und wobei der dieser PCI zugeordnete "totalPCIHandicap"-Wert mit einem Wert größer als Null initialisiert wird, bevor die PCI-Auswahlmethode für diese Zelle angewendet wird.

## Revendications

1. Une méthode pour sélectionner de manière automatique une valeur optimale de PCI à configurer sur une cellule, appartenant à un réseau de cellules, à l'aide d'une carte d'environnement radio,
dans laquelle la zone géographique sur laquelle les cellules sont déployées est découpée en un ensemble de Blocs Radio de Niveau 1,
et dans laquelle la taille d'un Bloc Radio de Niveau 1 est basée sur la puissance moyenne de transmission des cellules déployées,
et dans laquelle un groupe de PCIs est pré-alloué à chaque Bloc Radio de Niveau 1,
et dans laquelle ladite cellule est associée à un Bloc Radio de Niveau 1 spécifique à partir de sa localisation géographique et de sa couverture radio,
composée de l'une des deux opérations suivantes :
i. pour chaque PCI du groupe de PCIs du Bloc Radio de Niveau 1 associé à ladite cellule, calcul d'une valeur de handicap, incrémentée d'une valeur pour chaque contrainte qui n'est pas satisfaite entre ce PCI et le PCI configuré sur une cellule voisine, puis ajout de cette valeur de handicap à la valeur « totalPCIHandicap » associée à ce PCI, puis sélection du PCI dont la valeur « totalPCIHandicap » associée est la plus petite, ou bien,
ii. pour chaque PCI du groupe de PCIs du Bloc Radio de Niveau 1 associé à ladite cellule, ajout du PCI dans une liste de « PCI candidats » chaque fois que les contraintes entre ce PCI et le PCI configuré sur une cellule voisine sont satisfaites, puis sélection du PCI qui apparaît le plus fréquemment dans cette liste de « PCI candidats ».

2. La méthode selon la revendication 1 dans laquelle ladite valeur ajoutée à la valeur de handicap pour une contrainte donnée est une valeur préconfigurée associée à cette contrainte.

3. La méthode selon l'une au moins des revendications 1 à 2 dans laquelle la zone géographique sur laquelle les cellules sont déployées est découpée en un ensemble de Blocs Radio de Niveau 2 dont la taille est plus petite que celle des Blocs Radio de Niveau 1, et dans laquelle les contraintes sur le PCI sont vérifiées pour chaque Bloc Radio de Niveau 2 situé à l'intérieur de la couverture radio de ladite cellule.

4. La méthode selon l'une au moins des revendications 1 à 3 dans laquelle ladite méthode de sélection du PCI est initiée lorsque le PCI configuré sur une cellule est identifié comme étant non optimal, et dans laquelle la valeur « totalPCIHandicap » associée à ce PCI est initialisée avec une valeur supérieure à zéro, avant d'appliquer ladite méthode de sélection du PCI pour cette cellule.
